(19) Europäisches Patentamt
European Patent Office
Office européen des brevets

(11) Veröffentlichungsnummer: **0 600 255 B1**

(12) **EUROPÄISCHE PATENTSCHRIFT**

(45) Veröffentlichungstag der Patentschrift: **26.07.95**

(51) Int. Cl.6: **C04B 35/58**, C04B 35/65

(21) Anmeldenummer: **93117891.7**

(22) Anmeldetag: **04.11.93**

(54) **Verbundwerkstoffe auf der Basis von Titandiborid und Verfahren zu ihrer Herstellung.**

(30) Priorität: **05.11.92 DE 4237423**

(43) Veröffentlichungstag der Anmeldung:
**08.06.94 Patentblatt 94/23**

(45) Bekanntmachung des Hinweises auf die Patenterteilung:
**26.07.95 Patentblatt 95/30**

(84) Benannte Vertragsstaaten:
**AT DE FR GB SE**

(56) Entgegenhaltungen:

POWDER METALL. INT., Bd.23, Nr.5, 1991 Seiten 296 - 300 TH. JÜNGLING ET AL. 'Pressureless sintering of TiB2-Fe-materials'

DATABASE WPI Week 8037, 1980 Derwent Publications Ltd., London, GB; AN 80-65021C AGENCY OF IND. SCI. TECH. ET AL. 'Superhard heat-resistant titanium boride-iron boride sintered body' & JP-A-55 100 273 1. August 1980

CHEMICAL ABSTRACTS, Vol.94, no.12, 23 März 1981, Columbus, Ohio, US;abstract no. 89083r, 'Refractory materials with high hardness'.

(73) Patentinhaber: **Elektroschmelzwerk Kempten GmbH**
**Hans-Seidel-Platz 4**
**D-81737 München (DE)**

(72) Erfinder: **Sigl, Lorenz, Dr.**
**Schiedgasse 17**
**A-Lechaschau (AT)**
Erfinder: **Schwetz, Karl-Alexander, Dr.**
**Bergstrasse 4**
**D-87477 Sulzberg (DE)**
Erfinder: **Jüngling, Thomas**
**Rintheimer Strasse 72**
**D-76131 Karlsruhe (DE)**
Erfinder: **Oberacker, Rainer, Dr.**
**Friedrichstrasse 53**
**D-76706 Dettenheim (DE)**
Erfinder: **Thuemmler, Fritz, Prof. Dr.**
**Hohenwettersbacher Strasse 17**
**D-76228 Karlsruhe (DE)**

**Beschreibung**

Die Erfindung betrifft Verbundwerkstoffe auf der Basis von Titandiborid und Verfahren zu ihrer Herstellung.

Werkstoffe auf der Basis von Titandiborid besitzen einen extrem hohen Schmelzpunkt, gute chemische Beständigkeit, hohe Härte bei niedrigen und hohen Temperaturen, gute Kriech- und Oxidationsbeständigkeit, sehr gute elektrische Leitfähigkeit und ein niedriges spezifisches Gewicht. Wegen dieser Eigenschaften sind sie für eine Vielzahl technischer Anwendungen, z.B. als Schneidwerkzeuge, als Elektrodenmaterial, aber auch als verschleißbeanspruchte Bauteile oder als Konstruktionsteile in thermisch hoch beanspruchten Maschinen geeignet.

Die Herstellung solcher Verbundwerkstoffe bereitet Probleme, denn $TiB_2$ ist durch Drucklossintern nur ungenügend und nur bei extrem hohen Temperaturen von über 2100°C verdichtbar. Deshalb wurde versucht, durch Zusatz von Sinterhilfsmitteln die Sintertemperatur zu senken und gleichzeitig die Verdichtbarkeit zu steigern.

Die Patentschrift US 4.379.852 von Watanabe et al. beschreibt Kombinationen auf der Basis von Diboriden, insbesondere des Titans und des Zirkons, mit Bindern auf Boridbasis, wie insbesondere Co-, Ni- oder Fe-Borid sowie ihre Herstellung. Die in der Patentschrift beschriebenen Stoffe sind zwar sehr hart und fest, aber dafür besonders spröd.

Die Patentschrift US 4.259.119 von Watanabe et al. beschreibt Verbundwerkstoffe bestehend zu 99,99 bis 70 Gew.% aus einer Kombination von zwei Diboriden ausgewählt aus der Gruppe der Diboride von Ti, Ta, Cr, Mn, Mo, Y, V, Hf, Nb, Al und Zr, und zu 0,01 bis 30 Gew.% aus einem Binder auf Boridbasis welcher aus einem oder mehreren der Metallboride von Ni, Fe, oder Co ausgewählt ist. In den Beispielen werden nur $NiB$, $Ni_4B_3$, $FeB$, und $CoB$ als Binder auf Boridbasis eingesetzt.

In beiden vorgenannten Patentschriften wird unter anderem auch $Fe_2B$ als mögliches Bindemittel für die Herstellung der jeweiligen Verbundwerkstoffe genannt. Keines der Beispiele beschreibt jedoch einen Werkstoff, der $Fe_2B$ als Sinterhilfsmittel enthält.

Aus Th. Jüngling et al., Powder Metall. Int., Band 23, Nr. 5, 1991, S. 296-300 ist das Sintern von Mischungen aus $TiB_2$ und Fe bekannt. Die Patentanmeldung JP-A-55100273 beschreibt die Sinterung von Mischungen aus $TiB_2$ und $FeB$ und/oder $Fe_2B$.

Aus R. Telle und G. Petzow, Mat. Sci. Eng. A105/106, (1988), S. 97 - 104 ist bekannt, daß Verbundwerkstoffe, die neben Titandiborid noch metallreiche Boride wie $Fe_2B$, $Ni_3B$, oder $Co_3B$ enthalten, eine niedrige Härte und Zähigkeit besitzen. Daher, und auch aus dem im folgenden aufgeführten Stand der Technik, wurde bisher immer versucht die Bildung von $Fe_2B$ in den jeweiligen Verbundwerkstoffen zu vermeiden. So stufen z.B. R. Kieffer und F. Benesovsky, Hartmetalle S476, Springer Verlag 1965 solche Werkstoffe als spröde und wenig erfolgversprechend für den Einsatz als Schneid- und Verschleißwerkstoff ein. Auch in der Veröffentlichung von I. Smid und E. Kny "Evaluation of Binder Phases for Hardmetal Systems based on $TiB_2$" Int. J. Refractory and Hard Materials 8, 1988 135 - 138 wird das Auftreten von $Fe_2B$ für eine Schwächung der Binderphase und damit des Werkstoffs verantwortlich gemacht (Seite 137, Erster Absatz, Z. 9 - 11). In der Patentanmeldung EP-A-0 433 856, die Hartmetall-Mischwerkstoffe auf Basis von Boriden, Nitriden und Eisenbindemetallen beschreibt, heißt es mehrfach, daß die Bildung von $Fe_2B$ vermieden werden muß (siehe EP-A-0 433 856 S. 2, Z. 14 - 19 und Z. 41 - 45; S. 3, Z. 23 - 32). Trotz der Nennung im Rahmen einer Aufzählung in den bereits genannten US-Patentschriften wird der Fachmann daher in Anbetracht der weiteren genannten Schriften eher von Versuchen mit $Fe_2B$ als Sinterhilfsmittel für Werkstoffe auf der Basis von Titandiborid absehen.

Aufgabe der Erfindung war es, hochdichte, sehr harte, zähe und feste Verbundwerkstoffe auf der Basis von Titandiborid zur Verfügung zu stellen, die sich drucklos bereits bei niedrigeren Temperaturen sintern lassen.

Die Aufgabe wird gelöst durch Verbundwerkstoffe auf der Basis von Titandiborid, die dadurch gekennzeichnet sind, daß sie

(1) 70 bis 98 Vol.% Titandiborid,

(2) 1 bis 15 Vol.% $Fe_2B$, und

(3) 1 bis 15 Vol.% $Ti_2O_3$,

enthalten, und folgende Eigenschaften haben:

Dichte mindestens 93 % der theoretisch möglichen Dichte des gesamten Verbundwerkstoffes,

Härte (HV10) größer 1900,

Biegebruchfestigkeit (gemessen nach der Dreipunktmethode bei Raumtemperatur) mindestens 400 MPa

Bruchzähigkeit $K_{IC}$ (gemessen mit einem nach der Brückenmethode erzeugten scharfen Anriß) von mindestens 4,5 MPa/m.

Besonders bewährt haben sich Verbundwerkstoffe, die nur aus Titandiborid, $Fe_2B$ und $Ti_2O_3$ bestehen. Diese Verbundwerkstoffe bestehen zu 73 bis 96 Vol.%, bevorzugt zu etwa 84 bis 96 Vol.% besonders bevorzugt zu etwa 90 Vol.% aus Titandiborid und zu 3 bis 12 Vol.% bevorzugt zu etwa 7 Vol.% aus $Fe_2B$. Diese besonders bewährten Verbundwerkstoffe enthalten noch 1 bis zu 15 Vol.% $Ti_2O_3$. Sie haben folgende Eigenschaften:

Dichte mindestens 95 % der theoretisch möglichen Dichte des gesamten Verbundwerkstoffes,

Härte (HV10) größer 2000,

Biegebruchfestigkeit (gemessen nach der Dreipunktmethode bei Raumtemperatur) mindestens 500 MPa

Bruchzähigkeit $K_{IC}$ (gemessen mit einem nach der Brückenmethode erzeugten scharfen Anriß) von mindestens 4,5 $MPa\sqrt{m}$.

In den erfindungsgemäßen Verbundwerkstoffen wird die bisher immer als störend empfundene $Fe_2B$ Phase gezielt als Sinterhilfsmittel genutzt. Dabei kann $Fe_2B$ als reiner Stoff zugesetzt werden. Bevorzugt ist es aber, im Verlauf der Sinterung $Fe_2B$ durch Reaktion aus elementarem Eisen zu erzeugen. Dazu wird den Ausgangspulvermischungen ein borhaltiger Stoff, beispielsweise $B_4C$, und/oder elementares Bor und/oder Kohlenstoff zugegeben.

Die erfindungsgemäßen Verbundwerkstoffe lassen sich durch druckloses Flüssigphasensintern gegebenenfalls mit anschließendem Heißisostatpressen oder durch Sinter-HIPen herstellen.

Als Ausgangspulver sind handelsübliche Titandiborid-Pulver einer Korngröße < 10 $\mu$m geeignet. Bevorzugt geeignet sind Titandiborid-Pulver einer Korngröße < 5 $\mu$m. Beispielhaft ist die chemische Zusammensetzung einiger handelsüblicher Ausgangspulver in Tab. 1 wiedergegeben.

Tab.1

| Chemische Zusammensetzung handelsüblicher $TiB_2$-Pulver in Gew.-% | | | | | | |
|---|---|---|---|---|---|---|
| Pulverbezeichnung | Ti | B | O | N | C | Metall. Verunreinigungen |
| 1 | 66,5 | 29,7 | 2,1 | 0,06 | 0,17 | < 0,6 |
| 2 | 66,5 | 28,5 | 1,5 | 0,1 | 0,25 | < 0,6 |
| 3 | 67,5 | 29,5 | 0,3 | 0,2 | 0,2 | < 0,6 |
| 4 | 67,3 | 29,8 | 0,2 | 0,2 | 0,3 | < 0,6 |
| 5 | 66,5 | 28,5 | 1,0 | 1,0 | 1,0 | < 0,4 |

Das Sinterhilfsmittel $Fe_2B$ kann auf zwei Arten in den Verbundwerkstoff eingebracht werden, wobei die als zweites genannte Art bevorzugt geeignet ist:

1) durch Einbringen einer geeigneten Menge an $Fe_2B$-Pulver in das $TiB_2$ Pulver. Die $Fe_2B$ Ausgangspulver sollten dabei eine Korngröße kleiner 10 $\mu$m haben.

(2) durch Einbringen einer geeigneten Menge an pulverförmigem Eisen bzw. pulverförmigem Stahl in das $TiB_2$ Pulver. Die Eisen bzw. Stahlpulver sollten eine Korngröße kleiner 50 $\mu$m, bevorzugt < 25 $\mu$m haben.

Das pulverförmige Eisen kann dem $TiB_2$-Pulver entweder direkt beispielsweise in Form von handelsüblichen Eisen oder Stahlpulvern zugesetzt werden, es kann aber auch als Mahlabrieb über das Aufmahlen von $TiB_2$ mit Stahl- bzw. Eisenkugeln in das $TiB_2$-Pulver eingebracht werden. Beispiele für geeignete Eisen und Stahlpulver sind in Tab. 2 aufgeführt.

Tab.2
Chemische Zusammensetzung handelsüblicher Eisen/Stahl-Pulver in Gew.-%

| Pulverbe-zeichnung | C | Si | Mn | P | S | Cr | Ni | Mo | Fe |
|---|---|---|---|---|---|---|---|---|---|
| 1 | < 0,05 | 0,32 | 0,35 | < 0,045 | < 0,045 | – | – | – | Rest |
| 2 | 0,1 | 0,22 | 0,45 | 0,035 | 0,035 | – | – | – | Rest |
| 3 | 0,45 | 0,35 | 0,75 | 0,035 | 0,030 | – | – | – | Rest |
| 4 | 0,14 | 0,20 | 0,90 | 0,035 | 0,035 | 1,2 | – | 0,25 | Rest |
| 5 | 0,03 | 0,85 | 0,08 | 0,027 | 0,020 | 19,1 | 10,4 | – | Rest |
| 6 | 0,05 | 0,95 | 0,83 | 0,035 | 0,030 | 13,5 | – | – | Rest |

Bei Einsatz von pulverförmigem Eisen erfolgt die Bildung des $Fe_2B$ bevorzugt im Verlauf der Sinterung über die in den Gleichungen 1 bis 3 wiedergegebenen Reaktionen. Die notwendigen Hilfsstoffe, wie elementares B, $B_4C$ oder C, liegen in der Regel zumindest teilweise bereits im $TiB_2$-Ausgangspulverals Verunreinigungen vor. Die Hilfsstoffe werden ansonsten dem Titandiborid oder dem Ausgangsgemenge aus Titandiborid und Eisen in den stöchiometrisch benötigten Mengen bevorzugt in Korngrößen kleiner 10 $\mu$m

zugesetzt. Im Verlauf der Sinterung reagieren ab ca. 650°C diese Hilfsstoffe mit dem Eisen unter Bildung von $Fe_2B$ wie folgende Gleichungen verdeutlichen:

$$B_4C + 8 Fe \rightarrow 4Fe_2B + C \qquad (1)$$

$$B + 2 Fe \rightarrow Fe_2B \qquad (2)$$

$$C + TiB_2 + 4Fe \rightarrow 2Fe_2B + TiC \qquad (3)$$

Je nach Bor-Bilanz bleiben entweder geringe Mengen an unreagiertem Eisen zurück, oder es kommt bei einem Überschuß an Bor zur Bildung geringer Mengen von FeB.

Bei Verwendung von $B_4C$ als Hilfsstoff reduziert der im $B_4C$ vorhandene Kohlenstoff, der gemäß Gleichung (1) entsteht, in der weiteren Folge den eventuell vorhandenen, beispielsweise in Form von Titanoxid an die $TiB_2$-Ausgangspulver gebundenen Sauerstoff, z. B. gemäß der Reaktion:

$$2\ TiO_2 + C \rightarrow Ti_2O_3 + CO \qquad (4)$$

so daß im Endprodukt zusätzlich neben $TiB_2$ und $Fe_2B$ noch $Ti_2O_3$ vorliegt. Die Reaktion (4) ist von Bedeutung, weil sie das als benetzungshemmend bekannte $TiO_2$ von der $TiB_2$-Oberfläche entfernt, die dadurch im weiteren Sinterverlauf von der flüssigen Phase gut benetzt wird.

Zur Aufmahlung der Ausgangspulver können bekannte Mahlaggregate verwendet werden, wie Kugelmühlen Planetenkugelmühlen und Attritoren, in welchen die Mahlkörper und Mahlbehälter z.B. aus Eisen oder Stahl oder eisenhaltigen $TiB_2$-Verbundwerkstoffen bestehen.

Bei der Aufmahlung mit Mahlkörpern aus eisenhaltigen $TiB_2$-Verbundwerkstoffen können insbesondere grobe Ausgangspulver auf die gewünschte Kornfeinheit zerkleinert werden, während Mahlkörper aus Eisen für das Einbringen von Eisen und eine ausreichende Durchmischung der Ausgangspulver geeignet sind, da der Verkleinerungseffekt auf das Titandiborid hierbei nur gering ist.

Die nach der Mahlung des $TiB_2$ bzw. nach der Mischmahlung von $TiB_2$-Fe Ansätzen anfallenden Pulvergemische werden gegebenenfalls mit temporären Hilfsstoffen, z. B. bekannten Preß- und Bindehilfsmitteln wie beispielsweise Polyvinylalkohol oder Stearinsäure versetzt, und ggf. durch Sprühtrocknen rieselfähig gemacht. Sie werden anschließend durch bekannte keramische Formgebungsverfahren wie z. B. Trockenpressen, Spritzgießen oder Strangpressen unter Bildung von Grünkörpern mit einer Mindestdichte von 40 %TD, bevorzugt größer 55 % der theoretischen Dichte gegebenenfalls mit Grünbearbeitung in eine gewünschte Form gebracht. Durch eine geeignete Glühbehandlung, z.B. bei Temperaturen von ca. 300°C bis 700°C, bevorzugt etwa 600°C, werden die Preß- und Bindehilfsmittel wieder rückstandsfrei entfernt. Danach werden die Grünkörper unter Ausschluß von Sauerstoff in einem Vakuumofen auf Temperaturen im Bereich zwischen 1400 und 1900°C, vorzugsweise zwischen 1500 und 1700°C, erhitzt und bei dieser Temperatur 10 bis 600 min., vorzugsweise 15 bis 120 min., gehalten und schließlich langsam auf Raumtemperatur abgekühlt.

Anschließend können die Sinterkörper, falls dies für die jeweilige Anwendung wünschenswert ist, zweckmäßig vor dem Abkühlen auf Raumtemperatur, durch Anwendung von Druck mittels eines gasförmigen Druckübertragungsmediums, wie etwa Argon, bei Temperaturen zwischen 1200 und 1500°C unter einem Druck von 5 bis 200 MPa für eine Dauer von 5 bis 60 min. heißisostatisch nachverdichtet werden. Durch diese hüllenlose heißisostatische Nachverdichtung werden praktisch alle noch vorhandenen Poren eliminiert, so daß der fertige Sinterkörper eine Dichte größer 99 % seiner theoretischen Dichte aufweist.

Sie eignen sich besonders für die Verwendung zur Herstellung von Werkzeugen zur spanabhebenden Bearbeitung von Metallen, insbesondere von Al-Werkstoffen, Fe-Werkstoffen und Ni-Werkstoffen, zur Herstellung von Werkzeugen zur spanlosen Bearbeitung und Formgebung z. B. beim Ziehen, Tiefziehen, Fließpressen, Warmpressen, Walzen, Schneiden und Stanzen, zur Herstellung von Werkzeugen zur Gesteins- und Betonbearbeitung sowie zur Herstellung von Verschleißteilen im allgemeinen Maschinenbau wie z. B. Stützrollen, Spannbacken, Führungsbuchsen, Dichtungsringe, Ventile und Ventilkomponenten (Ventilringe, Ventilkugeln), Lagerbuchsen, Endmaße, Lehren, Fadenführer, Einsätze für Preß- und Strangpreßmatrizen.

In den folgenden Beispielen wird die Herstellung erfindungsgemäßer Verbundwerkstoffe näher beschrieben. Die in den Beispielen verwendeten Pulver hatten folgende Zusammensetzungen:

Tab. 3

| Chemische Zusammensetzung des verwendeten $TiB_2$-Pulvers | |
|---|---|
| **Element** | **Gew.-%** |
| O | 2,1 |
| C | 0,2 |
| N | 0,05 |
| Ti, B | Rest |

Tab. 4

| Phasenzusammensetzung des verwendeten $TiB_2$-Pulvers | |
|---|---|
| **Phase** | **Gew.-%** |
| $B_4C$ | 0,9 |
| $C_{frei}$ | 0,02 |
| $B_2O_3$ | 2,6 |
| $TiO_2$ | 1,5 |
| $TiB_2$ | Rest |

Tab. 5

| Chemische Zusammensetzung des verwendeten Eisen-Pulvers | |
|---|---|
| **Element** | **Gew.-%** |
| O | 0,2 |
| C | 0,05 |
| N | - |
| Fe | Rest |

**Beispiel 1**

900 g $TiB_2$-Pulver mit einer spezifischen Oberfläche von 2,5 m²/g (Tabelle 3) wurden zusammen mit 82,5 g Carbonyleisenpulver mit einer mittleren Teilchengröße von 20 $\mu$m (Tabelle 4) in 8 dm³ n-Heptan in einer Planetenkugelmühle aus Stahl mit Stahlkugeln 6 Stunden lang mit 120 U/min. vermahlen. Dabei ergab sich durch den Eisenabrieb eine Zunahme des Fe-Anteils um ca. 1,5 Gew.-% und eine geringfügige Zunahme des Sauerstoffgehaltes der Pulvermischung auf 2,5 Gew.%. Das Pulvergemisch wurde anschließend im Rotationsverdampfer getrocknet und durch Gesenkpressen bei 20 MPa und anschließendes kaltisostatisches Nachverdichten bei 400 MPa zu Platten der Größe 65x45x10 mm³ gepreßt. Diese Grünkörper wurden dann in einem Sinterofen mit Graphit-Heizleitern unter Vakuum von 0,1 mbar auf 1650°C erhitzt und bei dieser Temperatur 30 min. lang gesintert. Anschließend wurden die Platten langsam auf Raumtemperatur abgekühlt. Die im Sinterkörper auftretenden Phasen wurden mit Hilfe einer Röntgendiffraktometeranalyse mit Cu-$K_\alpha$-Strahlung identifiziert und die chemische Zusammensetzung ermittelt. Aus der Gesamtanalyse des Sinterkörpers berechnet sich seine Phasenzusammensetzung. Die berechnete Phasenzusammensetzung der Platten ist in Tab. 6, die chemische Zusammensetzung in Tab. 7 wiedergegeben.

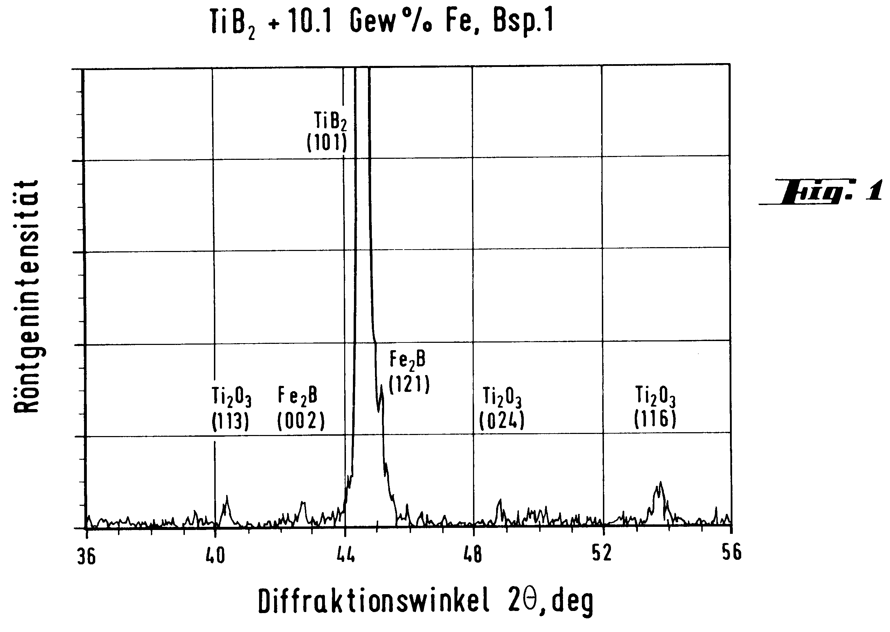

Die Röntgendiffraktometeranalyse des Sinterkörpers ist in Fig. 1 dargestellt. Daraus ist ersichtlich, daß nur die Phasen $TiB_2$, $Fe_2B$ und $Ti_2O_3$ im Sinterkörper vorliegen, weitere Phasen wie Fe oder FeB wurden nicht gefunden.

Tab. 6

| Berechnete Phasenzusammensetzung des Sinterkörpers aus Beispiel 1 | | |
|---|---|---|
| Phase | Gew.-% | Vol.-% |
| $TiB_2$ | 83,5 | 87,4 |
| $Fe_2B$ | 11,2 | 7,1 |
| $Ti_2O_3$ | 5,3 | 5,5 |

Tab. 7

| Chemische Zusammensetzung des Sinterkörpers aus Bsp. 1 | |
|---|---|
| Element | Gew.-% |
| Ti | 60,9 |
| B | 27,1 |
| Fe | 10,1 |
| O | 1,78 |
| N | 0,05 |
| C | 0,01 |

**Beispiel 2**

900 g $TiB_2$-Pulver mit einer spezifischen Oberfläche von 2,5 $m^2/g$ (Tabelle 3) wurden zusammen mit 160 g Carbonyleisenpulver mit einer mittleren Teilchengröße von 20 $\mu m$ (Tabelle 4) und 10 g elementarem Bor in 8 $dm^3$ n-Heptan in einer Planetenkugelmühle aus Stahl 6 Stunden lang mit 120 U/min. vermahlen. Die Pulver wurden dann wie in Beispiel 1 beschrieben, getrocknet, gepreßt und anschließend gesintert.

**Beispiel 3**

900 g $TiB_2$-Pulver mit einer spezifischen Oberfläche von 2,5 $m^2/g$ (Tabelle 3) wurden in einer Attritormühle aus Stahl unter Verwendung von Stahlkugeln solange unter n-Heptan als Mahlflüssigkeit gemahlen, bis ein Eisenabrieb von 48,5 g (5,1 Gew.% Fe) eingebracht war. Die Pulver wurden dann wie in Beispiel 1 beschrieben getrocknet, gepreßt und anschließend gesintert.

**Beispiel 4**

Gesinterte Platten aus Beispiel 1 werden einer Nachverdichtung durch heißisostatisches Pressen unter 10 MPa Ar bei 1500°C für 30 min. unterzogen und anschließend abgekühlt.

Aus den gesinterten bzw. nachverdichteten Platten wurden Probekörper zur Bestimmung verschiedener Eigenschaftskennwerte hergestellt.

Die Dichte der Probekörper wurde mit dem Auftriebsverfahren gemessen. Die Festigkeit wurde an Biegestäbchen der Dimension 5x5x35 $mm^3$ im Dreipunktbiegeversuch bestimmt. Die Bruchzähigkeit wurde durch Einbringen eines scharfen Anrisses mit der Brückenmethode und einem anschließenden Biegeversuch ermittelt. Die Härte wurde nach Vickers mit einer Eindrucklast von 98,1 N bestimmt.

Die Eigenschaftskennwerte der in den Beispielen 1 bis 4 hergestellten Werkstoffe sind in Tab. 8 zusammengefaßt.

Tab. 8

| Mechanische Eigenschaften der Sinterkörper der Beispiele 1 bis 4 | | | | |
|---|---|---|---|---|
| **Eigenschaft** | **Beisp. 1** | **Beisp. 2** | **Beisp. 3** | **Beisp. 4** |
| Dichte (g/cm$^3$) | 4,62 | 4,76 | 4,50 | 4,70 |
| Biegefestigkeit (MPa) | 606 | 741 | 588 | 750 |
| Härte (HV 10) | 2260 | 2140 | 2420 | 2350 |
| Zähigkeit (MPa$\sqrt{}$m) | 5,4 | 5,9 | 5,2 | 5,4 |
| E-Modul (GPa) | 510 | 505 | 520 | 515 |

**Patentansprüche**

1. Verbundwerkstoffe auf der Basis von Titandiborid, dadurch gekennzeichnet, daß sie
   (1) 70 bis 98 Vol.% Titandiborid,
   (2) 1 bis 15 Vol.% $Fe_2B$ und
   (3) 1 bis 15 Vol.% $Ti_2O_3$
   enthalten, und folgende Eigenschaften haben:
   Dichte mindestens 93 % der theoretisch möglichen Dichte des gesamten Verbundwerkstoffes,
   Härte (HV10) größer 1900,
   Biegebruchfestigkeit (gemessen nach der Dreipunktmethode bei Raumtemperatur) mindestens 400 MPa
   Bruchzähigkeit $K_{IC}$ (gemessen mit einem nach der Brückenmethode erzeugten scharfen Anriß) von mindestens 4,5 MPa$\sqrt{}$m.

2. Verbundwerkstoffe nach Anspruch 1, dadurch gekennzeichnet, daß sie zu
   73 bis 96 Vol.% aus Titandiborid,
   zu 3 bis 12 Vol.% aus $Fe_2B$, und
   zu 1 bis 15 Vol.% aus $Ti_2O_3$
   bestehen und folgende Eigenschaften haben:
   Dichte mindestens 95 % der theoretisch möglichen Dichte des gesamten Verbundwerkstoffes,
   Härte (HV10) größer 2000,
   Biegebruchfestigkeit (gemessen nach der Dreipunktmethode bei Raumtemperatur) mindestens 500 MPa
   Bruchzähigkeit $K_{IC}$ (gemessen mit einem nach der Brückenmethode erzeugten scharfen Anriß) von mindestens 4,5 MPa$\sqrt{}$m.

3. Verfahren zur Herstellung von Verbundwerkstoffen nach Anspruch 1 oder 2, dadurch gekennzeichnet, daß handelsübliche Titandiborid Pulver mit handelsüblichen Eisen- oder Stahlpulvern sowie gegebenenfalls einer borhaltigen Substanz und/oder elementarem Bor und/oder elementarem Kohlenstoff vermahlen werden, und die so erhaltene feine Pulvermischung durch Gesenkpressen, Kaltisostatpressen, Strangpressen, Spritzgießen, ggf. mit Grünbearbeitung zu Grünkörpern einer Dichte von mindestens 40 % der theoretischen Dichte geformt und anschließend unter Ausschluß von Sauerstoff bei Temperaturen im Bereich von 1400 bis 1900°C für 15 bis 600 min drucklos gesintert werden.

4. Verfahren zur Herstellung von Verbundwerkstoffen nach Anspruch 1 oder 2, dadurch gekennzeichnet, daß handelsübliche Titandiborid Pulver mit $Fe_2B$ Pulver einer Korngröße kleiner 10 $\mu$m sowie gegebenenfalls einer borhaltigen Substanz und/oder elementarem Bor und/oder elementarem Kohlenstoff vermahlen werden, und die so erhaltene Pulvermischung durch Gesenkpressen, Kaltisostatpressen, Strangpressen, Spritzgießen, ggf. mit Grünbearbeitung zu Grünkörpern geformt und anschließend unter Ausschluß von Sauerstoff bei Temperaturen im Bereich von 1400 bis 1900°C drucklos gesintert werden.

5. Verfahren nach Anspruch 3 oder 4, dadurch gekennzeichnet, daß die drucklos gesinterten Verbundwerkstoffe unter Druckanwendung mittels eines gasförmigen Druckübertragungsmediums bei Temperaturen von 1200°C bis 1500°C unter einem Druck von 5 bis 200 MPa für einen Zeitraum von 5 bis 60 min. nachverdichtet werden.

6. Verwendung der Verbundwerkstoffe nach Anspruch 1 oder 2 zur Herstellung von Verschleißteilen im allgemeinen Maschinenbau.

7. Verwendung der Verbundwerkstoffe nach Anspruch 1 oder 2 zur Herstellung von Werkzeugen zur Gesteins- und Betonbearbeitung.

8. Verwendung der Verbundwerkstoffe nach Anspruch 1 oder 2 zur Herstellung von Werkzeugen zur spanabhebenden Bearbeitung von Metallen.

9. Verwendung der Verbundwerkstoffe nach Anspruch 1 oder 2 zur Herstellung von Werkzeugen zur spanlosen Bearbeitung und Formgebung.

**Claims**

1. Composite material based on titanium diboride, characterized in that it contains
    (1) 70 to 98% by volume of titanium diboride,
    (2) 1 to 15% by volume of $Fe_2B$ and
    (3) 1 to 15% by volume of $Ti_2O_3$
    and has the following properties:
    density at least 93% of the theoretically possible density of the total composite material,
    hardness (HV10) greater than 1,900,
    bending fracture strength (measured by the three-point method at room temperature) at least 400 MPa and fracture resistance $K_{IC}$ (measured with a sharp incipient crack produced by the bridge method) of at least 4.5 MPa$\sqrt{m}$.

2. Composite material according to Claim 1, characterized in that it consists of
    73 to 96% by volume of titanium diboride,
    3 to 12% by volume of $Fe_2B$ and
    1 to 15% by volume of $Ti_2O_3$
    and has the following properties:
    density at least 95% of the theoretically possible density of the total composite material,
    hardness (HV10) greater than 2,000,
    bending fracture strength (measured by the three-point method at room temperature) at least 500 MPa and fracture resistance $K_{IC}$ (measured with a sharp incipient crack produced by the bridge method) of at least 4.5 MPa$\sqrt{m}$.

3. Process for the preparation of composite materials according to Claim 1 or 2, characterized in that commercial titanium diboride powders are milled with commercial iron or steel powders and, if required, a boron-containing substance and/or elemental boron and/or elemental carbon, and the fine powder mixture thus obtained is shaped by die pressing, cold-isostatic pressing, extrusion or injection moulding, if necessary with green processing to give green compacts having a density of at least 40% of the theoretical density, and then sintered under atmospheric pressure in the absence of oxygen at temperatures in the range from 1400 to 1900°C for 15 to 600 min.

4. Process for the preparation of composite materials according to Claim 1 or 2, characterized in that commercial titanium diboride powders are milled with $Fe_2B$ powder having a particle size smaller than 10 $\mu$m and, if required, a boron-containing substance and/or elemental boron and/or elemental carbon, and the powder mixture thus obtained is shaped by die pressing, cold-isostatic pressing, extrusion or injection moulding, if necessary with green processing to give green compacts, and then sintered under atmospheric pressure in the absence of oxygen at temperatures in the range from 1400 to 1900°C.

5. Process according to Claim 3 or 4, characterized in that the composite materials sintered under atmospheric pressure are recompacted with the application of pressure by means of a gaseous pressure transmission medium at temperatures of 1200°C to 1500°C under a pressure of 5 to 200 MPa for a period of 5 to 60 min.

6. Use of the composite materials according to Claim 1 or 2 for the production of wearing parts in general mechanical engineering.

7. Use of the composite materials according to Claim 1 or 2 for the production of tools for rock and concrete working.

8. Use of the composite materials according to Claim 1 or 2 for the production of tools for cutting metals.

9. Use of the composite materials according to Claim 1 or 2 for the production of tools for non-cutting machining and shaping.

**Revendications**

1. Matériaux composites à base de diborure de titane, caractérisés en ce qu'ils contiennent :
   (1) 70 à 98 % en volume de diborure de titane,
   (2) 1 à 15 % en volume de $Fe_2B$ et
   (3) 1 à 15 % en volume de $Ti_2O_3$,
   et en ce qu'ils ont les propriétés suivantes :
   Une densité valant au moins 93 % de la densité théoriquement possible de l'ensemble du matériau composite,
   dureté (HV 10) supérieure à 1900
   Résistance à la flexion (mesurée selon la méthode des trois points à la température ambiante) : au moins 400 MPa
   Ténacité à la rupture $K_{IC}$ (mesurée avec une entaille nette produite par la méthode des ponts ou de compensation) valant au moins 4,5 MPa/m.

2. Matériaux composites selon la revendication 1 caractérisés en ce qu'ils consistent :
   pour 73 à 96 % en volume en du diborure de titane,
   pour 3 à 12 % en volume en $Fe_2B$, et
   pour 1 à 15 % en volume en $Ti_2O_3$,
   et en ce qu'ils ont les propriétés suivantes :
   Une densité valant au moins 95 % de la densité théoriquement possible de l'ensemble du matériau composite,
   dureté (HV 10) supérieure à 2000,
   Résistance à la flexion (mesurée selon la méthode des trois points à la température ambiante) : au moins 500 MPa, Ténacité à la rupture, $K_{IC}$ (mesurée avec une entaille nette produite par la méthode des ponts) valant au moins 4,5 MPa/m

3. Procédé de fabrication de matériaux composites selon la revendication 1 ou 2, caractérisé en ce qu'on broye de la poudre de diborure de titane.

4. Procédé de fabrication de matériaux composites selon la revendication 1 ou 2, caractérisé en ce qu'on broye de la poudre de diborure de titane du commerce avec de la poudre de $Fe_2B$ d'une grosseur des grains inférieure à 10 $\mu$m et éventuellement avec une substance contenant du bore et/ou avec du bore élémentaire et/ou avec du carbone élémentaire, et l'on soumet le mélange pulvérulent ainsi obtenu à formage par pressage d'estampage, par pressage isostatique à froid, par extrusion, moulage par injection, éventuellement avec travail d'usinage à l'état vert et pour obtenir des corps verts et on les soumet ensuite, à l'abri de l'oxygène et en opérant à des températures de 1400 à 1900°C, à du frittage effectué sans application d'une pression.

5. Procédé selon la revendication 3 ou 4, caractérisé en ce que les matériaux composites frittés sans application d'une pression sont soumis à du post-compactage avec application d'une pression à l'aide d'un milieu gazeux de transmission de pression, à des températures de 1200°C à 1500°C, sous une presion de 5 à 200 MPA pendant un espace de temps de 5 à 60 minutes.

6. Utilisation des matériaux composites selon la revendication 1 ou 2 pour fabriquer des pièces d'usure dans la construction générale des machines.

7. Utilisation des matériaux composites selon la revendication 1 ou 2 pour fabriquer des outils pour le travail de façonnage ou de finition de la pierre et du béton.

8. Utilisation des matériaux composites selon la revendication 1 ou 2 pour fabriquer des outils pour le travail de métaux avec enlèvement de copeaux.

9. Utilisation des matériaux composites selon la revendication 1 ou 2 pour fabriquer des outils pour le travail et le formage sans enlèvement de copeaux.

TiB$_2$ + 10.1 Gew% Fe, Bsp.1

Röntgenintensität

TiB$_2$ (101)

Fe$_2$B (121)

Ti$_2$O$_3$ (113)

Fe$_2$B (002)

Ti$_2$O$_3$ (024)

Ti$_2$O$_3$ (116)

Diffraktionswinkel 2Θ, deg

Fig. 1

EP 0 600 255 B1